# EUROPÄISCHE PATENTSCHRIFT

(11) **EP 0 982 265 B1**
(45) Veröffentlichungstag und Bekanntmachung des Hinweises auf die Patenterteilung: **06.10.2004**
(21) Anmeldenummer: 99113724.1
(22) Anmeldetag: 13.07.1999
(51) Int. Cl.: B67D 5/58

(54) **Verfahren und Vorrichtung zum Entgasen einer Flüssigkeit**
Method and device for degassing a liquid
Procédé et dispositif pour le transvasement de liquide

(30) Priorität: 27.08.1998 DE 19839111
(43) Veröffentlichungstag der Anmeldung: 01.03.2000
(73) Patentinhaber: Schwarte Logistic GmbH, 59227 Ahlen (DE)
(72) Erfinder:
(74) Vertreter: Heim, Hans-Karl, Dipl.-Ing.

(56) Entgegenhaltungen:
- EP-A- 0 226 432
- DE-A- 3 440 310
- DE-A- 3 909 578
- FR-A- 1 460 636
- KIRK-OTHMER: 'Encyclopedia of Chemical Technology', Bd. 24, 1984, JOHN WILEY & SONS, NEW YORK
- ROBERT PERRY ET AL: 'Perry's Chemical Engineer's Handbook - seventh edition', 1997, MCGRAW-HILL, NEW YORK

## Beschreibung

Die Erfindung betrifft ein Verfahren zur Übernahme von Milch aus einem Bereitstellungsbehälter, bei dem in einem Gasabscheider mittels einer an dessen oberen Bereich angeschlossenen Unterdruckquelle ein Unterdruck erzeugt wird, wodurch die Milch aus dem Bereitstellungsbehälter über eine erste Leitungseinrichtung im wesentlichen tangential in den Gasabscheider gelangt und dort eine Oberfläche ausbildet, die im wesentlichen einem Rotationsparaboloiden entspricht, Gas in dem Bereich des Gasabscheiders oberhalb der Oberfläche der Milch, unterstützt durch auf die Milch wirkende Zentrifugalkräfte, austritt und das ausgetretene Gas mittels der Unterdruckquelle aus dem Gasabscheider abgeleitet wird. Die Erfindung betrifft ferner eine Vorrichtung, insbesondere zur Durchführung des erfindungsgemäßen Verfahrens, mit einem Gasabscheider, welcher einen im wesentlichen kreisförmigen Querschnitt aufweist und in welchen die Milch über eine erste Leitungseinrichtung im wesentlichen tangential einleitbar ist, einer an den oberen Bereich des Gasabscheiders angeschlossenen Unterdruckquelle, und einer zweiten Leitungseinrichtung zur Entnahme des Mediums aus dem Gasabscheider.

Aus der DE 38 37 765 C2 sind ein gattungsgemäßes Verfahren und eine gattungsgemäße Vorrichtung bekannt. Das Verfahren und die Vorrichtung dienen der Regelung des Füllstandes in einem Luft- oder Gasabscheider, wobei in diesem ein Unterdruck durch eine Vakuumpumpe erzeugt wird, wodurch das zu übernehmende Medium in den Gasabscheider gesaugt wird. Während des Übernahmeprozesses wird der Füllstand in dem Gasabscheider diskontinuierlich durch eine Schwimmeranordnung gemessen. Man hat bereits erkannt, daß es für die Entgasung des Mediums nützlich ist, wenn das Medium tangential in den Gasabscheider eingeleitet wird, so daß sich eine Oberfläche in Form eines Rotationsparaboloiden ausbildet. Die Entgasung wird dann durch die aufgrund der Rotation vorliegenden Zentrifugalkräfte unterstützt. Nachteilig an dem beschriebenen System ist jedoch, daß für das Ansaugen des Mediums in den Gasabscheider eine Vakuumpumpe verwendet wird, welche sehr viel Raum beansprucht, ein hohes Gewicht hat und einen großen Wartungs- und Montageaufwand bedingt. Weiterhin ist nachteilig, daß durch die Anordnung des Schwimmers bzw. Verdrängers auf der Flüssigkeitsoberfläche im Gasabscheider die Ausbildung eines optimalen Rotationsparaboloiden verhindert wird. Auch wäre eine kontinuierliche Füllstandsmessung wünschenswert, da dies eine optimale Regelung des Übernahmeprozesses gestattete und die Füllpegelerfassung unabhängig von einem Eichniveau innerhalb des Gasabscheiders machte.

Aus der DE 39 09 578 C2 sind ebenfalls Vorrichtung und Verfahren zur Gasabscheidung bekannt. Hier wird ein besonders nützliches System zur Einleitung der Flüssigkeit in den Gasabscheider vorgestellt, was die Ausbildung der paraboloiden Oberfläche begünstigt. Gleichwohl hilft die Offenbarung der genannten Druckschrift nicht über die erwähnten Nachteile hinweg.

Auch die DE 34 40 310 C2 betrifft ein Verfahren und eine Vorrichtung zur Übernahme von Flüssigkeit, insbesondere Milch. In dieser Veröffentlichung wird erwähnt, daß eine kontinuierliche Füllpegelüberwachung im Hinblick auf eine Optimierung des Förderprozesses wünschenswert ist. Darüber hinaus hilft die Druckschrift jedoch nicht bei der Ausräumung der genannten Probleme.

Der Erfindung liegt daher die **Aufgabe** zugrunde, ein Verfahren und eine Vorrichtung zur Verfügung zu stellen, so daß die genannten Nachteile des Standes der Technik überwunden werden, wobei Gewichts- und Volumenreduzierung, höhere technische und wirtschaftliche Effizienz und schonendere Übernahme des Mediums im Vordergrund stehen.

Diese Aufgabe wird durch ein Verfahren mit den Merkmalen des Patentanspruches 1 sowie durch eine Vorrichtung mit den Merkmalen des Patentanspruches 11 gelöst.

Das erfindungsgemäße **Verfahren** baut auf den Stand der Technik dadurch auf, daß der Unterdruck von einer Ejektoreinrichtung erzeugt wird. Das Verfahren ist insbesondere insofern vorteilhaft, als es mit besonders einfachen Komponenten auskommt; speziell wird keine zusätzliche Pumpe benötigt. Dies ist vor allem auf die Integration von Funktionen zurückzuführen - Erzeugen des Unterdruckes sowohl zum Ansaugen des Mediums als auch zum Ableiten von ausgetretenem Gas - in einer vergleichsweise einfachen und wenig aufwendigen Baueinheit.

Bevorzugt tritt das Medium im wesentlichen tangential aus dem Gasabscheider aus und wird über eine Pumpe zu einem Tank geleitet. Durch den tangentialen Austritt des Mediums wird die natürliche Bewegungsrichtung des Mediums - vermittelt durch die tangentiale Einleitung - ausgenutzt, was insbesondere Verwirbelungen und dergleichen im Bereich des Austritts vermeidet.

Vorteilhaft ist, wenn die Fördermenge durch einen zwischen Pumpe und Tank angeordneten Durchflußmesser gemessen wird.

Die Messung der Fördermenge ist erforderlich, da sie die Grundlage für die Abrechnung zwischen dem Lieferanten (Bauer) und dem Entnehmer bildet. Durchflußmesser haben sich zur Bestimmung der Fördermenge bewährt, insbesondere magnetisch-induktive Durchflußmesser (MID); auch sind Durchflußmesser bekannt, welche, trotz kaum zu vermeidender Restgaseinschlüsse in dem Medium, in der Lage sind, die Menge des Mediums genau zu bestimmen.

Bevorzugt wird der Füllpegel in dem Gasabscheider kontinuierlich gemessen, wobei das Meßergebnis einem Steuergerät zugeführt wird. Da es für das optimale Funktionieren des Gasabscheiders wichtig ist, den Füllpegel innerhalb bestimmter Grenzen zu halten, ist eine solche kontinuierliche Messung zur Optimierung des Gasabscheidevorganges besonders geeignet.

Vorzugsweise steuert das Steuergerät die Pumpenleistung und/oder die Druckluft-Ventileinrichtung in Abhängigkeit von der kontinuierlichen Messung des Füllpegels und/oder vorgebbarer bzw. erfaßter Parameter. Durch diese Maßnahme ist eine Automatisierung bereitgestellt, wobei die Bezugnahme auf die Meßergebnisse hinsichtlich des Füllpegels mit vom Benutzer eingebbaren Parametern kombiniert werden kann. Bei diesen Parametern kann es sich beispielsweise um den tatsächlichen Volumenstrom V handeln. Dieser Volumenstrom V hängt u.a. vom Gegemdruck der Pumpe und vom Unterdruck p im Gasabscheider ab. Einen weiteren Einfluß auf den Betrieb des Systems, insbesondere auf das Gasabscheideverhalten, kann auch die Temperatur ϑ des Mediums haben. Beispielsweise neigt kalte Milch in stärkerem Maße zur Schaumbildung als warme Milch. Auch kann die Wandstärke 1 des sich an der Grenzfläche des Mediums ausbildenden Paraboloiden einen Einfluß auf den Ablauf des Prozesses haben. Durch Vorgeben und/oder Erfassen zumindest eines dieser Parameter oder beliebiger anderer Parameter, die einen Einfluß auf den Prozeß nehmen können, ist es möglich, eine Regelung zur Systemoptimierung zu realisieren.

In diesem Zusammenhang ist es ebenso vorteilhaft, wenn das Steuergerät die Einstellungen von Druckluft- und Absaug-Ventileinrichtungen steuert, welche den Ejektoren zugeordnet sind.

Zur weiteren Optimierung des Prozeßablaufes ist es nützlich, wenn das Steuergerät die Einstellung von Ventilen steuert, die einem zwischen Gasabscheider und Ejektoreinrichtung angeordneten Schaumabscheider zugeordnet sind.

Vorzugsweise wird die Übernahme in Abhängigkeit einer Lieferantenidentifikation gestartet. Demgemäß kann das System mit Identifikationsmitteln (Bar Codes etc.) versehen sein, wobei nur eine positive Identifikation die Inbetriebnahme der Anlage erlaubt. Die Identifikation des Lieferanten kann weitergehend vorteilhaft ausgenutzt werden, wenn mit der Identifikation die jeweils spezifischen Annahmebedingungen bei dem speziellen Lieferanten erkannt werden. Dies hängt damit zusammen, daß die Regel-/Steuerungscharakteristik des Gasabscheiders stark von den Annahmebedingungen abhängt. Beispielsweise führt ein hochliegender Tank im allgemeinen zu einem geringen Unterdruck, während ein tiefliegender Tank einen hohen Unterdruck erfordert. Ganz anders können wiederum die Bedingungen sein, wenn ein bestimmter Lieferant mehrere kleine Bereitstellungsbehälter (Kannen) verwendet. Neben der Anordnung der jeweiligen Tanks spielt auch deren Größe für die Regelung bzw. die Steuerung eine wichtige Rolle. Indem nun der Tank identifiziert wird, sind auch die zu erwartenden Annahmebedingungen bekannt bzw. können in einem Selbstlernverfahren ermittelt werden. Dies kann beispielsweise positiv im Zusammenhang mit der Tourenplanung des Tankfahrzeuges ausgenutzt werden.

Das Verfahren ist besonders vorteilhaft, wenn zunächst zwei Ejektoren in Betrieb sind, nach Ablauf einer vorgebbaren Zeit oder nach Erreichen eines vorgebbaren Pegelsollwertes im Gasabscheider einer der Ejektoren durch Betätigen der entsprechenden Ventileinrichtung abgeschaltet wird, vor Beendigung der Übernahme erneut zwei Ejektoren in Betrieb genommen werden und bei Beendigung der Übernahme die Ejektoren durch Betätigen der entsprechenden Ventileinrichtungen abgeschaltet werden. Durch diesen speziellen Verfahrensablauf erreicht man, daß zu Beginn der Übernahme eine große Saugleistung vorliegt, welche zum Ansaugen des Mediums aus dem Bereitstellungsbehälter in den Gasabscheider ausreicht, während der Übernahme die Förderung des Mediums mit verminderter Saugleistung aufrechterhalten wird, was vorteilhaft zur Einsparung von Druckluft führt, und gegen Ende der Übernahme, zum Absaugen von sich im Bereitstellungsbehälter befindenden Resten, wieder mit erhöhter Saugleistung gearbeitet wird.

Bevorzugt werden nach Beendigung der Übernahme der Schaumabscheider und der Gasabscheider belüftet, ein dem Schaumabscheider zugeordnetes Ventil wird geöffnet, so daß abgeschiedener Schaum in den Gasabscheider gelangt, und das Niveau des Mediums in dem Gasabscheider wird auf Eichniveau gebracht. Damit steht die Anlage für den nächsten Einsatz zur Verfügung, da insbesondere der Schaumabscheider entleert ist und keine verderblichen Flüssigkeitsreste enthält. Ferner muß der Schaumabscheider entleert werden, damit die entsprechende Menge Milch dem richtigen Lieferanten zugeordnet wird.

Die erfindungsgemäße Vorrichtung baut auf den Stand der Technik dadurch auf, daß eine mit dem oberen Bereich des Gasabscheiders in Verbindung stehende Ejektoreinrichtung zum Fördern des zu übernehmenden Mediums und zum Ableiten von sich oberhalb des Mediums im Gasabscheider befindlichem Gas vorgesehen ist. Durch eine solche Ejektoreinrichtung, welche unter anderem die Pumpe zur Förderung des Mediums aus dem Bereitstellungsbehälter in den Gasabscheider ersetzt, ist es möglich, das erfindungsgemäße System beachtlich zu vereinfachen. In der Ejektoreinrichtung, welche nach dem Prinzip einer Wasserstrahlpumpe arbeitet, werden zwei Hauptfunktionen des Systems integriert, nämlich das Ansaugen des Mediums aus dem Bereitstellungsbehälter in den Gasabscheider sowie eine Unterstützung der Entgasung durch das Abführen von Gas aus dem Raum oberhalb der Oberfläche des Mediums im Gasabscheider. Volumen und Masse der Vorrichtung werden erheblich vermindert, was insbesondere bei der Installation der Vorrichtung auf einem Tankfahrzeug vorteilhaft ist. Weiterhin ist der Wartungs- und Montageaufwand im Vergleich zu den Vorrichtungen des Standes der Technik erheblich geringer.

Vorzugsweise ist in dem Gasabscheider ein Peilstab zur kontinuierlichen Messung des Füllpegels vorgesehen, wobei die Meßergebnisse einem Steuergerät zuführbar sind. Durch die kontinuierliche Messung des Füllpegels kann stets für eine optimale Befüllung des Gasabscheiders gesorgt werden, was zu einer besonders guten und effizienten Funktion des Systems führt. Als Steuergerät kann bevorzugt eine Einheit verwendet werden, welche ein Steuer-Regelmodul und einen Controller sowie eventuell eine Schalteinheit aufweist.

Bevorzugt ist eine Pumpe zum Fördern des Mediums aus dem Gasabscheider über die zweite Leitungseinrichtung in einen Tank vorgesehen. Durch eine solche Pumpe ist es möglich, eine definierte Menge des sich in dem Gasabscheider befindenden Mediums dem Tank pro Zeiteinheit zuzuführen.

Besonders vorteilhaft ist in diesem Zusammenhang, wenn die Pumpenleistung in Abhängigkeit von der kontinuierlichen Messung des Füllpegels und/oder vorgebbarer bzw. erfaßter Parameter von dem Steuergerät steuerbar ist.

Es ist vorteilhaft, wenn die maximale Förderleistung der Pumpe höher ist als die maximale Saugleistung der Ejektoreinrichtung. Durch diese Maßnahme ist das System in der Lage, stets, durch Erhöhung der Pumpen-Fördermenge, auf einen erhöhten Füllstand im Gasabscheider zu reagieren. Auch wenn die Ejektoreinrichtung mit voller Saugleistung arbeitet und ein erhöhter Füllstand im Gasabscheider vorliegt, ist es nicht erforderlich, die Saugleistung zu verringern, da eine Korrektur des Füllstandes schlicht durch Erhöhung der Pumpenleistung herbeigeführt werden kann.

Bevorzugt ist eine Druckluft-Ventileinrichtung vorgesehen, über welche die Ejektoreinrichtung mit Druckluft beaufschlagbar ist. Durch diese Maßnahme hat man es in der Hand, die Ejektoreinrichtung, wann immer erforderlich, vollständig in Betrieb zu nehmen oder die Funktion der Ejektoreinrichtung, eventuell teilweise, zu unterbrechen bzw. zu reduzieren.

Vorzugsweise umfaßt die Druckluft-Ventileinrichtung Proportionalventile zur stufenlosen Druckluftregelung.

Vorteilhafterweise ist eine Absaug-Ventileinrichtung.vorgesehen, über welche die Ejektoreinrichtung mit dem oberen Bereich des Gasabscheiders in Verbindung steht. Damit liegt eine weitere Möglichkeit zur Variation der Systemeinstellungen vor.

Wiederum ist es besonders vorteilhaft, wenn diese weitere Möglichkeit in die Steuerung des Systems einbezogen wird, was dadurch erreicht werden kann, daß die Absaug-Ventileinrichtung in Abhängigkeit von der kontinuierlichen Messung des Füllpegels und/oder vorgebbarer bzw. erfaßter Parameter von dem Steuergerät steuerbar ist.

Bevorzugt weist die Ejektoreinrichtung zwei oder mehr Ejektoren auf. Dadurch ist es möglich, je nach Bedarf, die Saugleistung über einen weiten Bereich zu variieren und ferner, durch Abschalten eines oder mehrerer Ejektoren, Druckluft zu sparen.

Bevorzugt weisen die Ejektoren der Ejektoreinrichtung verschiedene Saugleistungen auf, so daß, wiederum je nach Bedarf, die Saugleistung an die speziellen Bedingungen angepaßt werden kann.

Es ist vorteilhaft, wenn jedem Ejektor ein Druckluftventil und ein Absaugventil zugeordnet ist. Dadurch ist die Möglichkeit der Einflußnahme auf die Ejektoreinrichtung maximal.

Vorzugsweise ist zwischen dem oberen Bereich des Gasabscheiders und der Ejektoreinrichtung ein Schaumabscheider vorgesehen. Dieser Schaumabscheider verhindert, daß von dem Medium gebildeter Schaum in die Ejektoren gelangt und deren Funktion beeinträchtigt bzw. zu deren Verschmutzung führt.

Bevorzugt ist/sind dem Schaumabscheider ein oder mehrere Ventil(e) zugeordnet, welche(s) von dem Steuergerät einstellbar ist/sind. Durch diese Maßnahme können die verschiedenen Komponenten (Ejektoreinrichtung, Gasabscheider, Schaumabscheider) zu geeigneten Zeitpunkten verbunden oder voneinander getrennt werden, was insbesondere im Zusammenhang mit dem Beginn und dem Ende des Übernahmevorganges, beispielsweise für eine Belüftung, besonders nützlich ist.

Es ist weiterhin vorteilhaft, wenn die zweite Leitungseinrichtung zur Entnahme des Mediums aus dem Gasabscheider einen Durchflußmesser und ein Rückschlagventil aufweist.

Die Erfindung wird im folgenden beispielhaft anhand eines Ausführungsbeispiels und mit Bezug auf die begleitenden Zeichnungen erläutert. Dabei zeigen:
- Fig. 1: eine schematische Darstellung eines Ausführungsbeispiels der vorliegenden Erfindung; und
- Fig. 2: ein Diagramm zur Erläuterung einer Ejektoreinrichtung.

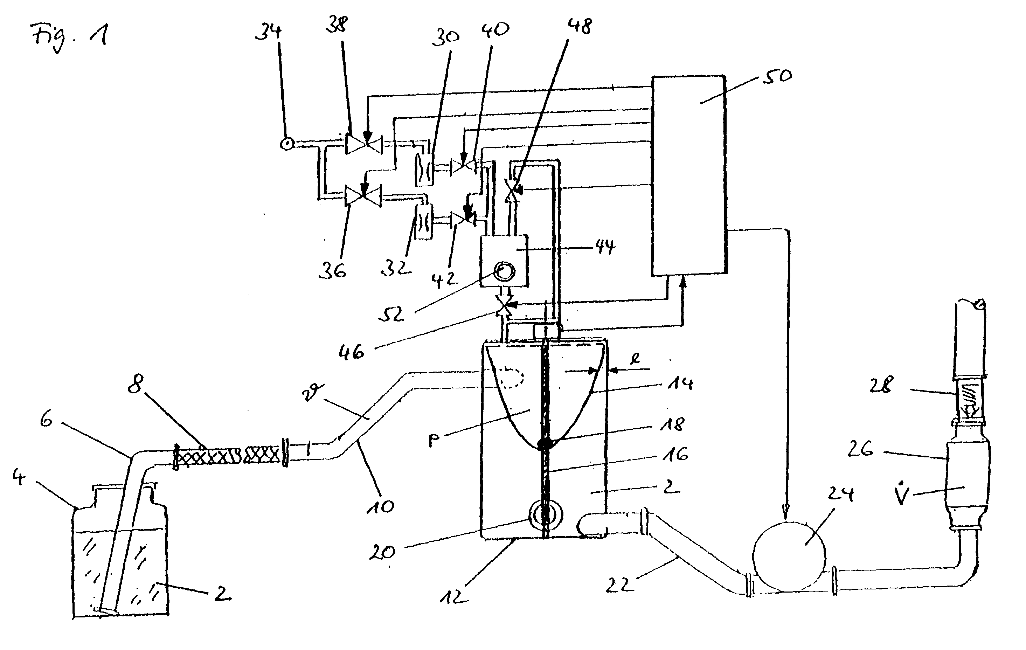

In Fig. 1 ist eine Vorrichtung zur Übernahme eines Mediums, insbesondere von Milch 2 dargestellt. Die Milch 2 wird aus einem Bereitstellungsbehälter 4 über ein Tauchrohr oder eine Sauglanze 6 abgesaugt. Die Sauglanze 6 ist über einen flexiblen Schlauch 8 und ein weiteres Leitungselement 10 mit einem Gasabscheider 12 verbunden, in welchen die Milch 2 im oberen Bereich tangential eingeleitet wird. Durch diese tangentiale Einleitung der Milch 2 in den Gasabscheider 12 wird bewirkt, daß die Milch 2 innerhalb des Gasabscheiders 12 rotiert, wodurch sich eine Oberfläche 14 in Form eines Paraboloiden ausbildet. In dem Gasabscheider 12 ist ein Peilstab 16 vorgesehen, welcher nach den verschiedensten Prinzipien arbeiten kann; im vorliegenden Fall weist der Peilstab 16 einen Schwimmer 18 auf. Zur visuellen Kontrolle des Innenraums des Gasabscheiders 12 ist in dessen unterem Bereich ein Schauglas 20 angeordnet. Ebenfalls im unteren Bereich des Gasabscheiders 12 ist der Auslaß für die Milch 2 vorgesehen, durch welchen diese, wiederum in tangentialer Richtung, in eine zweite Leitungseinrichtung 22 eintritt. Eine Pumpe 24 fördert die Milch 2 über einen Durchflußmesser 26 und ein Rückschlagventil 28 zu dem zu befüllenden Tank.

Zum Ansaugen der Milch 2 aus dem Bereitstellungsbehälter 4 ist eine Ejektoreinrichtung vorgesehen, welche im vorliegenden Fall zwei Ejektoren 30, 32 umfaßt. Die Ejektoren 30, 32 werden über einen Druckluftanschluß 34 und jeweils zugehörige Druckluftventile 36, 38 mit Druckluft beaufschlagt. Das Beaufschlagen mit Druckluft kann über stetig arbeitende Proportionalventile erfolgen. Weitere Ventile 40, 42 sind in den jeweiligen Ansaugleitungen der Ejektoren 30, 32 vorgesehen. Die Ejektoren 30, 32 stehen über die Ventile 40, 42, einen Schaumabscheider 44 und weitere, dem Schaumabscheider 44 zugeordnete Ventile 46, 48 mit dem oberen Bereich des Gasabscheiders 12 in Verbindung. Der Schaumabscheider 44 enthält zur visuellen Kontrolle ein Schauglas 52.

Die Vorrichtung wird von einem Steuergerät 50 gesteuert bzw. geregelt, wobei dieses als Eingangssignal zumindest das Füllpegel-Meßsignal aus dem Gasabscheider 12 erhält, welches, vermittelt durch den Peilstab 16 und den Schwimmer 18, gemessen wird. Abhängig von diesem Meßsignal und eventuell anderen Parametern, z.B. dem im Gasabscheider 12 herrschenden Absolutdruck (p) bzw. der Wanddicke des Rotationsparaboloiden (1), werden von dem Steuergerät 50 die Pumpe 24, die Druckluftventile 36, 38, die Absaugventile 40, 42 sowie die dem Schaumabscheider 44 zugeordneten Ventile 46, 48 angesteuert.

Im folgenden wird ein bevorzugter Verfahrensablauf geschildert. Zu Beginn des Verfahrens ist der Gasabscheider 12 leer bzw. die sich darin befindende Flüssigkeit ist auf Eichniveau. Die Sauglanze 6 wird in den Bereitstellungsbehälter gegeben. Nachdem eventuell durch Identifikationsvorrichtungen die Identität des Lieferanten (Bauer) festgestellt und bestätigt wurde, ist das System startbereit. Für die Steuerung bzw. Regelung des Gasabscheiders 12 spezifische Parameter, wie z.B. die zu erwartende Menge, physikalische Gegebenheiten etc., können aufgrund dieser Identifikation zugeordnet werden. Somit werden die Ejektoren durch Öffnen der Druckluftventile 36, 38 und der Absaugventile 40, 42 in Betrieb genommen und durch Öffnen des Ventils 48 wird eine Verbindung zwischen den Ejektoren 30, 32 mit dem Gasabscheider 12 über den Schaumabscheider 44 hergestellt. Durch die hohe Saugleistung, welche durch den Betrieb zweier Ejektoren 30, 32 vorliegt, gelingt es, Milch 2 aus dem Bereitstellungsbehälter 4 in den Gasabscheider 12 zu saugen. Nach einer dem Steuergerät 50 eingegebenen Zeit - entsprechend einem Zustand, in welchem der Gasabscheider 12 ausreichend mit Milch 2 gefüllt ist - oder in Abhängigkeit von einem bestimmten Füllstand im Gasabscheider 12, wird einer der Ejektoren 30, 32 durch Betätigen der entsprechenden Ventile 36, 38, 40, 42 abgeschaltet, wobei der andere Ejektor 30, 32 die Befüllung des Gasabscheiders 12 und die für die Gasabscheidung erforderliche Rotation der Milch 2 aufrecht erhält. Gegen Ende des Übernahmevorganges - trotz Reduktion der Leistung der Pumpe 24 sinkt der Füllpegel in dem Gasabscheider 12 zunehmend ab - werden wiederum beide Ejektoren 30, 32 durch Öffnen der entsprechenden Ventile 36, 38, 40, 42 geöffnet. Nach dem Absaugen der restlichen Milch 2 aus dem Behälter 4 werden beide Ejektoren 30, 32 abgeschaltet. Der Gasabscheider 12 und der Schaumabscheider 44 werden belüftet, das Ablaßventil 46 des Schaumabscheiders 44 wird geöffnet, damit der Schaum in den Gasabscheider 12 gelangen kann, und das Flüssigkeitsniveau wird auf das Eichniveau zurückgefahren. Bei einem entsprechend genau arbeitenden Peilstab 16, wie z.B. einem nach dem magnetostriktiven, transsonaren Prinzip arbeitenden Peilstab 16, ist es nicht erforderlich, daß Eichniveau bei Beendigung des Prozesses genau anzufahren, vielmehr ist es ausreichend, daß im Gasabscheider 12 befindliche Restvolumen zu ermitteln.

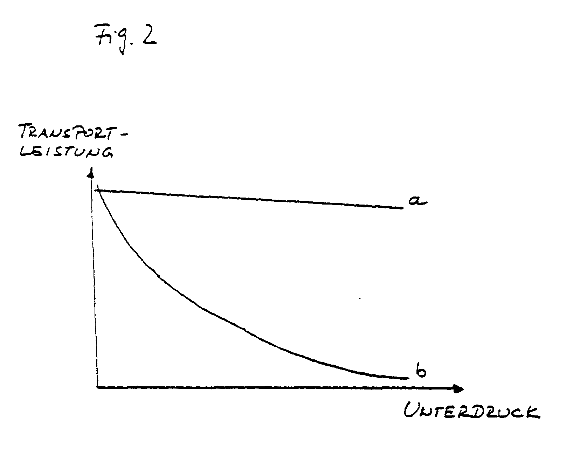

Fig. 2 verdeutlicht die Funktion eines Ejektors im Vergleich zu einer Flüssigkeitsring-Vakuumpumpe. In dem Diagramm sind die Förderleistung von Flüssigkeitsring-Vakuumpumpe (a) und Ejektor (b) in Abhängigkeit vom Unterdruck aufgetragen. Es ist zu erkennen, daß die Kennlinie der Flüssigkeitsring-Vakuumpumpe (a) wesentlich weniger mit dem sich ändernden Druck variiert, während die Ejektor-Kennlinie (b) eine stark druckabhängige Charakteristik zeigt. Gewöhnlich wird diese Charakteristik der Ejektoren als Nachteil angesehen. Die vorliegende Erfindung macht sich diese Eigenschaft jedoch als Vorteil zunutze. Da bei großem Unterdruck die Förderleistung stark abnimmt, wird das Auftreten von Kavitationen innerhalb der Milch und damit der Einschluß von Gas vermieden. Um bei Vakuumpumpen (Wasserring-Vakuumpumpen) solche Kavitationen zu vermeiden sind aufgrund der praktisch konstanten Kennlinie (a) zusätzliche Maßnahmen zur Begrenzung erforderlich. Durch den Einsatz von Ejektoren anstelle einer Pumpe werden also zum einen derartige Maßnahmen überflüssig, und zum anderen garantiert die Verwendung der Ejektoren eine schonende Entnahme der Milch.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zur Übernahme von Milch (2) aus einem Bereitstellungsbehälter (4), bei dem
- in einem Gasabscheider (12) mittels einer an dessen oberen Bereich angeschlossenen Unterdruckquelle (30, 32) ein Unterdruck erzeugt wird, wodurch die Milch (2) aus dem Bereitstellungsbehälter (4) über eine erste Leitungseinrichtung (6, 8, 10) im Wesentlichen tangential in den Gasabscheider (12) gelangt und dort eine Oberfläche ausbildet, die im Wesentlichen einem Rotationssparaboloiden entspricht,
- Gas in dem Bereich des Gasabscheiders (12) oberhalb der Oberfläche der Milch (2), unterstützt durch auf die Milch (2) wirkende Zentrifugalkräfte, austritt und
- das austretende Gas mittels der Unterdruckquelle (30, 32) aus dem Gasabscheider (12) abgeleitet wird, **dadurch gekennzeichnet,**
- **dass** die Unterdruckquelle (30, 32) aus einer Ejektoreinrichtung besteht und dass der Unterdruck von einer aus wenigstens zwei Ejektoren (30, 32) bestehenden Ejektoreinrichtung erzeugt wird,
- **dass** zunächst zwei Ejektoren (30, 32) in Betrieb sind,
- nach Ablauf einer vorgebbaren Zeit oder nach Erreichen eines vorgebbaren Pegelsollwertes im Gasabscheider (12) einer der Ejektoren (30, 32) durch Betätigen der entsprechenden Ventileinrichtung (36, 38, 40, 42) abgeschaltet wird,
- vor Beendigung der Übernahme erneut zwei Ejektoren (30, 32) durch Betätigen der entsprechenden Ventileinrichtungen (36, 38, 40, 42) in Betrieb genommen werden und
- bei der Beendigung der Übernahme die Ejektoren (30, 32) durch Betätigen der Ventileinrichtungen (36, 38, 40, 42) abgeschaltet werden.

2. Verfahren nach Anspruch 1,
**dadurch gekennzeichnet,**
**dass** die Saugleistung der Ejektoreinrichtung durch verschiedene Saugleistungen der Ejektoren (30, 32) bedarfsweise an die speziellen Bedingungen im Gasabscheider (12) angepasst wird.

3. Verfahren nach Anspruch 1 oder 2,
**dadurch gekennzeichnet,**
**dass** die Milch (2) im Wesentlichen tangential aus dem Gasabscheider (12) austritt und über eine Pumpe (24) vom Gasabscheider (12) zu einem Tank geleitet wird.

4. Verfahren nach einem der vorangehenden Ansprüche,
**dadurch gekennzeichnet,**
**dass** die Fördermenge durch einen zwischen Pumpe (24) und Tank angeordneten Durchflussmesser (26) gemessen wird.

5. Verfahren nach einem der vorangehenden Ansprüche,
**dadurch gekennzeichnet,**
**dass** der Füllpegel in dem Gasabscheider (12) kontinuierlich gemessen und die Messergebnisse einem Steuergerät (50) zugeführt werden.

6. Verfahren nach Anspruch 5,
**dadurch gekennzeichnet,**
**dass** das Steuergerät (50) die Pumpenleistung und/oder die Druckluft-Ventileinrichtung in Abhängigkeit von der kontinuierlichen Messung des Füllpegels und/oder vorgebbarer bzw. erfasster Parameter (Volumenstrom V, Druck p, Temperatur 0, Wandstärke des Paraboloiden I) steuert.

7. Verfahren nach einem der vorangehenden Ansprüche,
**dadurch gekennzeichnet,**
**dass** ein Steuergerät (50) die Einstellung von Druckluft-Ventileinrichtungen (36, 38) und/oder Absaug-Ventileinrichtungen (40, 42) steuert, die der Ejektoreinrichtung (30, 32) zugeordnet sind.

8. Verfahren nach einem der vorangehenden Ansprüche,
**dadurch gekennzeichnet,**
**dass** ein Steuergerät die Einstellung von Ventilen (46, 48) steuert, die einem zwischen Gasabscheider (12) und Ejektoreinrichtung (30, 32) angeordneten Schaumabscheider (44) zugeordnet sind.

9. Verfahren nach einem der vorangehenden Ansprüche,
**dadurch gekennzeichnet,**
**dass** die Übernahme in Abhängigkeit einer durch Identifikationsdaten bereitgestellten Lieferantenidentifikation gestartet wird und vorgebbare Parameter zur Steuerung des Gasabscheiders (12) den Identifikationsdaten entnommen werden.

10. Verfahren nach einem der vorangehenden Ansprüche,
**dadurch gekennzeichnet,**
**dass**
- nach Beendigung der Übernahme der Schaumabscheider (44) und der Gasabscheider (12) belüftet werden,
- ein dem Schaumabscheider (44) zugeordnetes Ventil (46) geöffnet wird, so dass abgeschiedener Schaum in den Gasabscheider gelangt, und
- das Niveau der Milch (2) in dem Gasabscheider (12) auf Eichniveau gebracht wird.

11. Vorrichtung, insbesondere zur Durchführung des Verfahrens nach einem der Ansprüche 1 bis 10, mit
- einem Gasabscheider (12), welcher einen im Wesentlichen kreisförmigen Querschnitt aufweist und in welchen die Milch (2) über eine erste Leitungseinrichtung (6, 8, 10) im wesentlichen tangential einleitbar ist,
- einer an den oberen Bereich des Gasabscheiders (12) angeschlossenen Unterdruckquelle (30, 32), und
- einer zweiten Leitungseinrichtung (22) zur Entnahme der Milch (2) aus dem Gasabscheider (12),
**dadurch gekennzeichnet,**
**dass** als Unterdruckquelle (30, 32) eine aus wenigstens zwei Ejektoren (30, 32) bestehende Ejektoreinrichtung vorgesehen ist.

12. Vorrichtung nach Anspruch 11,
**dadurch gekennzeichnet,**
**dass** die Ejektoren (30, 32) verschiedene Saugleistungen aufweisen.

13. Vorrichtung nach Anspruch 11 oder 12,
**dadurch gekennzeichnet,**
**dass** im Gasabscheider (12) ein Peilstab (16) zur kontinuierlichen Messung des Füllpegels vorgesehen ist, wobei die Messergebnisse einem Steuergerät (50) zuführbar sind.

14. Vorrichtung nach einem der Ansprüche 11 bis 13,
**dadurch gekennzeichnet,**
**dass** in der zweiten Leitungseinrichtung (22) eine Pumpe (24) zum Fördern der Milch (2) aus dem Gasabscheider (12) angeordnet ist, und
**dass** die maximale Förderleistung der Pumpe (24) höher ist als die maximale Saugleistung der Ejektoreinrichtung (30, 32).

15. Vorrichtung nach einem der Ansprüche 11 bis 14,
**dadurch gekennzeichnet,**
**dass** eine Druckluft-Ventileinrichtung (36, 38) vorgesehen ist, über welche die Ejektoreinrichtung (30, 32) mit Druckluft beaufschlagbar ist.

16. Vorrichtung nach Anspruch 15,
**dadurch gekennzeichnet,**
**dass** die Druckluft-Ventileinrichtung (36, 38) Proportionalventile zur stufenlosen Druckluftregelung umfasst.

17. Vorrichtung nach einem der Ansprüche 11 bis 16,
**dadurch gekennzeichnet,**
**dass** eine Absaug-Ventileinrichtung (40, 42) vorgesehen ist, über welche die Ejektoreinrichtung (30, 32) mit dem oberen Bereich des Gasabscheiders (12) in Verbindung steht.

18. Vorrichtung nach Anspruch 17,
**dadurch gekennzeichnet,**
**dass** die Absaug-Ventileinrichtung (40, 42) in Abhängigkeit von der kontinuierlichen Messung des Füllpegels und/oder vorgebbarer bzw. erfasster Parameter (Volumenstrom V, Druck p, Temperatur 0, Wandstärke des Paraboloiden I) von dem Steuergerät 50 steuerbar ist.

19. Vorrichtung nach einem der Ansprüche 11 bis 18,
**dadurch gekennzeichnet,**
**dass** jedem Ejektor (30, 32) ein Druckluftventil (38, 36) sowie ein Absaugventil (40, 42) zugeordnet ist.

20. Vorrichtung nach einem der Ansprüche 11 bis 19,
**dadurch gekennzeichnet,**
**dass** zwischen dem oberen Bereich des Gasabscheiders (12) und der Ejektoreinrichtung (30, 32) ein Schaumabscheider (44) vorgesehen ist.

21. Vorrichtung nach Anspruch 20,
**dadurch gekennzeichnet,**
**dass** dem Schaumbabscheider (44) ein oder mehrere Ventil(e) (44, 48) zugeordnet ist/sind, welche(s) von dem Steuergerät (50) einstellbar ist/sind.

22. Vorrichtung nach einem der Ansprüche 11 bis 21,
**dadurch gekennzeichnet,**
**dass** die zweite Leitungseinrichtung (22), in Strömungsrichtung gesehen, im Wesentlichen tangential aus dem Gasabscheider (12) austritt und einen Durchflussmesser (26) und ein Rückschlagventil (28) aufweist.

## Claims

1. Method for receiving milk (2) from a preparation container (4), in which
- a vacuum is produced in a gas separator (12) by means of a vacuum source (30, 32) connected to the upper area thereof, so that the milk (2) passes from the preparation container (4) via a first line means (6, 8, 10) in a substantially tangential manner into the gas separator (12), where a surface is formed, which essentially corresponds to a paraboloid of revolution,
- gas emerges in the area of the gas separator (12) above the surface of the milk (2), assisted by centrifugal forces acting on the milk (2) and
- the emerging gas is drawn off from the gas separator (12) by means of the vacuum source (30, 32),
**characterized in that**
- the vacuum source (30, 32) comprises an ejector means and the vacuum is produced by an ejector means comprising at least two ejectors (30, 32),
- initially two ejectors (30, 32) are in operation,
- at the end of a predeterminable time or on reaching a predeterminable desired level value in the gas separator (12) one of the ejectors (30, 32) is disconnected by operating the corresponding valve means (36, 38, 40, 42),
- prior to the end of reception, two ejectors (30, 32) are put into operation again by operating the corresponding valve means (36, 38, 40, 42) and
- at the end of reception, the ejectors (30, 32) are disconnected by operating the valve means (36, 38, 40, 42).

2. Method according to claim 1, **characterized in that** the suction capacity of the ejector means is, as required, adapted to the specific conditions in the gas separator (12) by differing suction capacities of the ejectors (30, 32).

3. Method according to claim 1 or 2, **characterized in that** the milk (2) emerges substantially tangentially from the gas separator (12) and is passed via a pump (24) from the gas separator (12) to a tank.

4. Method according to one of the preceding claims, **characterized in that** the delivery is measured by a flowmeter (26) positioned between the pump (24) and the tank.

5. Method according to one of the preceding claims, **characterized in that** the fill level in the gas separator (12) is continuously measured and the results of the measurement are supplied to a control unit (50).

6. Method according to claim 5, **characterized in that** the control unit (50) controls the pumping capacity and/or the compressed air valve means as a function of the continuous measurement of the fill level and/or predeterminable or determined parameters (volume flow V, pressure p, temperature 0, wall thickness of the paraboloid I).

7. Method according to one of the preceding claims, **characterized in that** a control unit (50) controls the setting of compressed air valve means (36, 38) and/or suction valve means (40, 42) associated with the ejector means (30, 32).

8. Method according to one of the preceding claims, **characterized in that** a control unit controls the setting of the valves (46, 48), which are associated with a froth separator (44) positioned between the gas separator (12) and the ejector means (30, 32).

9. Method according to one of the preceding claims, **characterized in that** reception is started as a function of a supplier identification made available by identification data and predeterminable parameters are extracted from the identification data for controlling the gas separator (12).

10. Method according to one of the preceding claims,
**characterized in that**
- at the end of reception the froth separator (44) and gas separator (12) are aerated,
- a valve (46) associated with the froth separator (44) is opened, so that separated froth passes into the gas separator and
- the level of the milk (2) is brought to the calibrated level in the gas separator (12).

11. Device, particularly for performing the method according to one of the claims 1 to 10, having
- a gas separator (12), which has a substantially circular cross-section and into which the milk (2) is introduceable in a substantially tangential manner via a first line means (6, 8, 10),
- a vacuum source (30, 32) connected to the upper area of the gas separator (12) and
- a second line means (22) for removing the milk (2) from the gas separator (12),
**characterized in that**
- the vacuum source (30, 32) is an ejector means comprising at least two ejectors (30, 32).

12. Device according to claim 11, **characterized in that** the ejectors (30, 32) have different suction capacities.

13. Device according to claim 11 or 12, **characterized in that** in the gas separator (12) is provided a gauging stick (16) for the continuous measurement of the fill level, the results of the measurement being suppliable to a control unit (50).

14. Device according to one of the claims 11 to 13, **characterized in that** in the second line means (22) is provided a pump (24) for delivering the milk (2) from the gas separator (12) and that the maximum delivery of the pump (24) is higher than the maximum suction capacity of the ejector means (30, 32).

15. Device according to one of the claims 11 to 14, **characterized in that** a compressed air valve means (36, 38) is provided by means of which compressed air can be supplied to the ejector means (30, 32).

16. Device according to claim 15, **characterized in that** the compressed air valve means (36, 38) incorporates proportional valves for continuous compressed air control.

17. Device according to one of the claims 11 to 16, **characterized in that** a suction valve means (40, 42) is provided by means of which the ejector means (30, 32) is connected to the upper area of the gas separator (12).

18. Device according to claim 17, **characterized in that** the suction valve means (40, 42) is controllable by the control unit (50) as a function of the continuous measurement of the fill level and/or predeterminable or determined parameters (volume flow V, pressure p, temperature 0, wall thickness of the paraboloid I).

19. Device according to one of the claims 11 to 18, **characterized in that** with each ejector (30, 32) is associated a compressed air valve (38, 36) and a suction valve (40, 42).

20. Device according to one of the claims 11 to 19, **characterized in that** a froth separator (44) is provided between the upper area of the gas separator (12) and the ejector means (30, 32).

21. Device according to claim 20, **characterized in that** one or more valves (46, 48) are associated with the froth separator (44) and can be adjusted by the control unit (50).

22. Device according to one of the claims 11 to 21, **characterized in that**, considered in the flow direction, the second line means (22) emerges substantially tangentially from the gas separator (12) and has a flowmeter (26) and a check valve (28).

## Revendications

1. Dispositif pour transférer du lait (2) depuis un récipient d'alimentation (4), dans lequel :
- dans un séparateur (12) de gaz, une dépression est produite au moyen d'une source de dépression (30, 32) raccordée à son partie supérieure, de telle sorte que le lait (2) entre sensiblement tangentiellement dans le séparateur (12) de gaz en venant du récipient d'alimentation (4) par l'intermédiaire d'un premier dispositif de canalisation (6, 8,10) et y forme une surface qui correspond sensiblement à un paraboloïde de rotation,
- du gaz sort dans la zone du séparateur (12) de gaz située au-dessus de la surface du lait (2) avec le soutien des forces centrifuges agissant sur le lait (2), et
- le gaz sortant est évacué du séparateur (12) de gaz au moyen de la source de dépression (30, 32),
***caractérisé***
- ***en ce que*** la source de dépression (30, 32) est composée d'un dispositif à éjecteur(s) et ***en ce que*** la dépression est produite par un dispositif à éjecteur(s) composé d'au moins deux éjecteurs (30, 32),
- ***en ce que*** deux éjecteurs (30, 32) sont d'abord en service,
- au terme d'une période prédéterminable ou quand on atteint une valeur de consigne de niveau prédéterminable dans le séparateur (12) de gaz, l'un des éjecteurs (30, 32) est arrêté par actionnement d'un dispositif de vanne (36, 38, 40, 42) correspondant,
- avant la fin du transfert, deux éjecteurs (30, 32) sont de nouveau mis en service par actionnement des dispositifs de vanne (36, 38, 40, 42) correspondants, et
- à la fin du transfert, les éjecteurs (30, 32) sont arrêtés par actionnement des dispositifs de vanne (36, 38, 40, 42).

2. Procédé selon la revendication 1, ***caractérisé en ce que*** la puissance d'aspiration du dispositif à éjecteurs est adaptée si nécessaire aux conditions particulières à l'intérieur du séparateur (12) de gaz en faisant varier la puissance d'aspiration des éjecteurs (30, 32).

3. Procédé selon la revendication 1 ou 2, ***caractérisé en ce que*** le lait (2) sort pour l'essentiel tangentiellement du séparateur (12) de gaz et est envoyé par une pompe (24) du séparateur (12) de gaz à une citerne.

4. Procédé selon l'une quelconque des revendications précédentes, ***caractérisé en ce que*** le débit est mesuré par un débitmètre (26) placé entre la pompe (24) et la citerne.

5. Procédé selon l'une quelconque des revendications précédentes, ***caractérisé en ce que*** le niveau de remplissage à l'intérieur du séparateur (12) de gaz est mesuré en continu et les résultats des mesures sont envoyés à un appareil de commande (50).

6. Procédé selon la revendication 5, ***caractérisé en ce que*** l'appareil de commande (50) commande la puissance de pompe et/ou le dispositif de vanne à air comprimé en fonction de la mesure continue du niveau de remplissage et/ou de paramètres prédéterminables ou relevés (débit volumique V, pression p, température 0, épaisseur de paroi du paraboloïde 1).

7. Procédé selon l'une quelconque des revendications précédentes, ***caractérisé en ce qu'**un* appareil de commande (50) pilote le réglage de dispositifs de vanne à air comprimé (36, 38) et/ou de dispositifs de vanne d'aspiration (40, 42) qui sont associés au dispositif à éjecteurs (30, 32).

8. Procédé selon l'une quelconque des revendications précédentes, ***caractérisé en ce qu****'un* appareil de commande pilote le réglage de vannes (46, 48) qui sont associées à un séparateur (44) de mousse placé entre le séparateur (12) de gaz et le dispositif à éjecteurs (30, 32).

9. Procédé selon l'une quelconque des revendications précédentes, ***caractérisé en ce que*** le transfert est démarré en fonction d'une identification de fournisseur fournie par des données d'identification et des paramètres prédéterminables sont extraits des données d'identification pour piloter le séparateur (12) de gaz.

10. Procédé selon l'une quelconque des revendications précédentes, ***caractérisé en ce qu'**au* terme du transfert, le séparateur (44) de mousse et le séparateur (12) de gaz sont aérés,
une vanne (46) associée au séparateur (44) de mousse est ouverte, de telle sorte que la mousse extraite arrive dans le séparateur de gaz, et
le niveau du lait (2) dans le séparateur (12) de gaz est amené au niveau de calibrage.

11. Dispositif, particulièrement pour appliquer le procédé selon l'une quelconque des revendications 1 à 10, avec :
- un séparateur (12) de gaz qui présente une section sensiblement circulaire et dans lequel le lait (2) peut être introduit sensiblement tangentiellement par l'intermédiaire d'un premier dispositif de canalisation (6, 8, 10),
- une source de dépression (30, 32) raccordée à la partie supérieure du séparateur (12) de gaz, et
- un deuxième dispositif de canalisation (22) pour prélever le lait (2) depuis le séparateur (12) de gaz,
***caractérisé en ce qu****'*il est prévu comme source de dépression (30, 32) un dispositif à éjecteurs composé d'au moins deux éjecteurs (30, 32).

12. Dispositif selon la revendication 11, ***caractérisé en ce que*** les éjecteurs (30, 32) présentent des puissances d'aspiration différentes.

13. Dispositif selon la revendication 11 ou 12, ***caractérisé en ce qu***'une jauge (16) de niveau est prévue dans le séparateur (12) de gaz pour la mesure continue du niveau de remplissage, les résultats des mesures pouvant être envoyés à un appareil de commande (50).

14. Dispositif selon l'une quelconque des revendications 11 à 13, ***caractérisé en ce* qu'**une pompe est placée dans le deuxième dispositif de canalisation (22) pour acheminer le lait (2) depuis le séparateur (12) de gaz, et ***en ce que*** la capacité maximale de pompage de la pompe (24) est supérieure à la capacité maximale d'aspiration du dispositif à éjecteurs (30, 32).

15. Dispositif selon l'une quelconque des revendications 11 à 14, ***caractérisé*** *en* ***ce*** *qu*'un dispositif de vanne à air comprimé (36, 38) est prévu, par l'intermédiaire duquel le dispositif éjecteur (30, 32) peut être exposé à de l'air comprimé.

16. Dispositif selon la revendication 15, ***caractérisé en ce que*** le dispositif de vanne à air comprimé (36, 38) comprend des vannes proportionnelles pour le réglage continu de l'air comprimé.

17. Dispositif selon l'une quelconque des revendications 11 à 16, ***caractérisé en ce qu****'un* dispositif de vanne d'aspiration (40, 42) est prévu, par l'intermédiaire duquel le dispositif à éjecteurs (30, 32) est en liaison avec la partie supérieure du séparateur (12) de gaz.

18. Dispositif selon la revendication 17, ***caractérisé en ce que*** le dispositif de vanne d'aspiration (40, 42) peut être piloté par l'appareil de commande (50) en fonction de la mesure continue du niveau de remplissage et/ou de paramètres prédéterminables ou relevés (débit volumique V, pression p, température 0, épaisseur de paroi du paraboloïde I).

19. Dispositif selon l'une quelconque des revendications 11 à 18, ***caractérisé en ce qu'à*** chaque éjecteur (30, 32) est associée une vanne d'air comprimé (38, 36), ainsi qu'une vanne d'aspiration (40, 42).

20. Dispositif selon l'une quelconque des revendications 11 à 19, ***caractérisé en ce qu*'**entre la partie supérieure du séparateur (12) de gaz et le dispositif à éjecteurs (30, 32) est prévu un séparateur de mousse (44).

21. Dispositif selon la revendication 20, ***caractérisé en ce qu'au*** séparateur de mousse (44) est/sont associée(s) une ou plusieurs vannes (44, 48) qui est/sont réglable(s) par l'appareil de commande (50).

22. Dispositif selon l'une quelconque des revendications 11 à 21, ***caractérisé en ce que*** le deuxième dispositif de canalisation (22), en regardant dans la direction d'écoulement, sort pour l'essentiel tangentiellement du séparateur (12) de gaz et comporte un débitmètre (26) et une vanne de sûreté (28).
